# EUROPÄISCHE PATENTSCHRIFT

(11) **EP 2 821 329 B1**
(45) Veröffentlichungstag und Bekanntmachung des Hinweises auf die Patenterteilung: **16.11.2016**
(21) Anmeldenummer: 14175349.1
(22) Anmeldetag: 02.07.2014
(51) Int. Cl.: B62D 35/00

(54) **System und Verfahren zum Montieren eines Spoilers an der Karosserie eines Fahrzeugs**
System and method for fitting a spoiler to the body of a vehicle
Système et procédé de montage d'un spoiler sur la carrosserie d'un véhicule

(30) Priorität: 05.07.2013 ES 201331009
(43) Veröffentlichungstag der Anmeldung: 07.01.2015
(73) Patentinhaber: Seat, S.A., 08760 Martorell, Barcelona (ES)
(72) Erfinder: Fernández Gómez, Antonio, 08760 BARCELONA (ES); Cárdenas García, Javier, 08760 BARCELONA (ES)
(74) Vertreter: Isern-Jara, Nuria

(56) Entgegenhaltungen:
- JP-A- H10 213 115
- JP-A- 2001 263 313
- JP-A- 2005 008 128
- JP-A- 2006 298 229
- JP-A- 2007 131 198

## Beschreibung

Die vorliegende Patentanmeldung hat ein System zum Montieren eines Spoilers an der Karosserie eines Fahrzeugs zum Gegenstand, wobei der Spoiler Befestigungsmittel an der Karosserie gemäß dem Oberbegriff von Anspruch 1 aufweist.

Die vorliegende Patentanmeldung hat außerdem ein Verfahren zum Montieren eines Spoilers an der Karosserie eines Fahrzeugs zum Gegenstand, wobei der Spoiler Befestigungsmittel an der Karosserie gemäß dem Oberbegriff von Anspruch 11 aufweist.

Derzeit basieren die Systeme zur Befestigung der Spoiler an der Karosserie von Fahrzeugen auf Schrauben, die Stanzungen am Fahrzeugblech erfordern. Dazu setzen sich die derzeitigen Systeme zusammen aus: a) Elementen wie etwa Zentriervorrichtungen oder Clips, die es ermöglichen, den Spoiler zum Einschrauben der Schrauben in Montageposition zu halten, b) zusätzlichen Schrauben, sodass zum Befestigen des Spoilers durch die Wirkung der Schrauben das Blech dahingehend modifiziert wird, dass zusätzliche Löcher ausgeführt werden.

Derzeit gibt es diverse Lösungen für das System zum Befestigen eines Spoilers an der Karosserie eines Fahrzeugs. So wird in der Schrift des Stands der Technik JP4564396 ein Befestigungssystem des Spoilers ohne Schrauben mittels Klammern beschrieben, die sich auf der Blindseite des Spoilers befinden und entlang der Oberfläche verteilt sind. Die Klammern sind nicht einstückig, sondern in die Nuten oder Hohlräume des Spoilers eingeführt. Genauer gesagt weist eine Zangenstütze eine Basis und eine Stütze der Führung auf, die auf einer Seite des Fahrzeugkarosserieblechs zum Aufnehmen eines Clips in der horizontalen Richtung ausgebildet ist. Das Teil der Führungsstütze weist ein Aufnahmeloch zum Aufnehmen eines Clipsitzes von einer Endseite in der horizontalen Richtung, ein Führungsteil zum Führen des Sitzes des Clips vom Aufnahmeloch zur anderen Endseite und ein Endteil zum Regulieren des Bewegungsbegrenzungspunkts des Clipsitzes auf.

Andererseits wird in der Schrift des Stands der Technik JP3850813 ein Befestigungssystem des Spoilers unter den Stoßstangen beschrieben, wobei Clips als Klammern vorgesehen sind, welche eine erste Vormontageposition ermöglichen. Die Vormontageposition dient dazu, den Spoiler zu stützen und es dem Monteur zu ermöglichen, die Clips oder Klammern in den Löchern zu befestigen. Genauer gesagt ist eine Befestigungsstruktur des Spoilers beschrieben, die mit einer vorderen Stoßstange verbunden ist. Der Spoiler der Stoßstange ist mit einem Teil des Spoilerkörpers, das im hinteren Teil eines Innenwandteils angeordnet ist, und einer Platte versehen, die vom Teil des Ablenkkörpers vorsteht. Das erste Befestigungsteil ist elastisch blockiert, da es in ein erstes Befestigungsloch eingeführt ist. Das zweite Befestigungsteil ist in ein zweites Befestigungsloch eingeführt und durch einen Clip dauerhaft befestigt, der in ein Einführungsloch in der Nähe des zweiten Kupplungslochs des Rückwandteils der Stoßstange eingeführt ist.

Es ist wünschenswert, das derzeitige Montagesystem der Spoiler eines Fahrzeugs einfacher zu gestalten, insbesondere für kleine Produktionsserien, wie etwa Sportwagenserien oder Serien mit spezifischen aerodynamischen oder ästhetischen Anforderungen, ohne neue Öffnungen in ihrem Karosserieblech ausführen zu müssen. Es ist anzumerken, dass diese kleinen Produktionsserien Elemente der Karosserie mit anderen, größeren Produktionsserien gemeinsam haben, die die Anbringung von anderen Spoilerarten mit anderen Abmessungen und anderen Befestigungspunkten berücksichtigen.

Es besteht daher ein Bedarf an einem Montagesystem für einen Spoiler an der Karosserie eines Fahrzeugs, das eine Vormontageposition aufweist, keine zusätzlichen Öffnungen im Blech der Fahrzeugkarosserie erfordert und nach dem korrekten Anklammern die notwendige Haltekraft gewährleistet.

Ein Montagesystem mit den Merkmalen der Präambel der unabhängigen Ansprüche wird in der JP2005008128 vorgestellt. Gemäß der vorliegenden Erfindung wird diese Aufgabe mithilfe eines Systems und Verfahrens zum Montieren eines Spoilers an der Karosserie eines Fahrzeugs gemäß den unabhängigen Ansprüchen 1 und 11 gelöst. Zusätzliche Vorteile der Erfindung sind in den abhängigen Ansprüchen dargestellt.

Gemäß der Erfindung weist das Verfahren zum Montieren eines Spoilers an der Karosserie eines Fahrzeugs Befestigungsmittel des Spoilers an der Karosserie auf, wobei die Befestigungsmittel ein Passstück, das mechanisch mit dem Spoiler verbunden ist, und eine Zwischenführung aufweisen, wobei das Passstück und die Zwischenführung Haltemittel untereinander aufweisen, und wobei das Passstück und die Zwischenführung Mittel zum Anklammern an mindestens eine Öffnung der Karosserie des Fahrzeugs aufweisen. Dadurch ermöglicht das Montagesystem das Befestigen des Spoilers an Serienmodellen, ohne das Blech der Karosserie modifizieren zu müssen. Das ist deshalb der Fall, da es dasselbe Teil ist, nämlich die Zwischenführung, das die Funktionen der Vormontage und der Befestigung zusammen ausführt, ohne die Notwendigkeit von Schrauben und daher ohne die Notwendigkeit, das Blech zu modifizieren. Die Zwischenführung sieht die Möglichkeit einer ersten Vormontageposition, die die Ausführung einer optimalen Anpassung der Position ermöglicht, und einer zweiten Position vor, in der die Zwischenführung am Spoiler befestigt ist. Gemäß der Erfindung ist es möglich, die Anbringung von der Fahrzeuginnenseite aus durchzuführen, wobei es nicht möglich ist, die Operation von der Außenseite rückgängig zu machen, wodurch die Möglichkeiten eines Diebstahls des Spoilers eingeschränkt sind.

Zudem weisen die Haltemittel am Passstück mindestens einen Drehkranz auf, der in mindestens eine Gleitbahn in der Zwischenführung eingeführt und darin verschoben wird. Dadurch sind beide Stücke, das Passstück und die Zwischenführung, in einer Vormontageposition, in der sie Spiel zur Verschiebung und Anpassung untereinander aufweisen, vor ihrer endgültigen Montageposition verbunden.

Günstigerweise wird der Drehkranz in einer ersten Richtung in die Gleitbahn eingeführt und der Drehkranz in der Gleitbahn in einer zweiten Richtung verschoben, die nicht die erste Richtung ist, sodass ein Verschiebungsspielraum für den Drehkranz in der Gleitbahn vorliegt, wodurch die Vormontage-Verbindungssituation erhalten bleibt. Vorzugsweise verlaufen die erste und zweite Richtung im Wesentlichen senkrecht zueinander.

Insbesondere weist der Drehkranz ein Kopfstück und eine Säule mit einer geringeren Abmessung als das Kopfstück auf, und die Gleitbahn weist ein Fenster und einen Durchgang mit einer geringeren Abmessung als das Fenster auf, sodass das Kopfstück eine kleinere Abmessung als das Fenster aufweist und die Säule eine kleinere Abmessung als der Durchgang aufweist. Dadurch liegt ein Spiel vor, das die Einführung des Passstücks in die Zwischenführung und außerdem die Verschiebung zueinander in der Vormontagesituation erleichtert.

Gemäß einem anderen Aspekt der Erfindung weist die Gleitbahn der Zwischenführung eine Decke und einen Boden auf, zwischen denen das Kopfstück des Drehkranzes verschoben wird. Dadurch ist die Bewegung des Kopfstücks innerhalb des Freiheitsgrads begrenzt, den ihm die Gleitbahn ermöglicht, wobei die Decke und der Boden die physischen Grenzen sind, die den Haltevorgang in der Einführungsrichtung im Vormontagezustand ausführen.

Günstigerweise weist die Gleitbahn der Zwischenführung eine Ausbeulung auf, die das Kopfstück während einer Verschiebung in der zweiten Richtung durch die Gleitbahn überläuft, sodass das Kopfstück auf dem Rückweg nicht leicht dem Fenster gegenüberliegen kann, was bedeutet, dass das Passstück und die Zwischenführung sich im Vormontagezustand nicht lösen.

Gemäß einem anderen Aspekt der Erfindung weisen die Mittel zum Anklammern am Passstück mindestens eine Rippe und an der Zwischenführung mindestens einen Befestigungsclip auf, sodass die mindestens eine Rippe mechanisch mit dem mindestens einen Befestigungsclip in Einwirkung tritt. Dadurch fixiert der Befestigungsclip die Montageendposition. Die Montageendposition blockiert die Bewegung in der zweiten Richtung in einer Richtung durch das Ende der Gleitbahn, an das das Kopfstück anstößt, und in der Gegenrichtung durch den Clip. Die Bewegung in der Einführungsrichtung, d.h. der ersten Richtung, ist durch die Decke und den Boden der Gleitbahn blockiert.

Bei der Vormontage wird das Passstück in einer ersten Richtung in die Zwischenführung eingeführt und dann das Passstück bezüglich der Zwischenführung in einer zweiten Richtung verschoben, bis das Passstück die Ausbeulung der Gleitbahn überläuft. Bei der Montage erfolgt eine zweite Verschiebung in der zweiten Richtung, bis der Befestigungsclip der Zwischenführung mit der Rippe des Passstücks in Einwirkung tritt.

Gemäß wiederum einem anderen Aspekt der Erfindung weisen die Mittel zum Anklammern in der Zwischenführung mindestens eine Aufnahme mit mindestens zwei Klauen und am Passstück mindestens einen Vorsprung auf. Dadurch verfügt das Montagesystem über Mittel, die in der endgültigen Montageposition zur mechanischen Einwirkung aufeinander angeordnet sind. Es ist anzumerken, dass, wenn der Montageablauf in der zweiten Richtung noch nicht erfolgt ist, die Zwischenführung, und insbesondere die Aufnahme mit mindestens zwei Klauen, in die Öffnung der Fahrzeugkarosserie einsetzbar ist, da es in diesem Moment möglich ist, den Spoiler unter Ausübung einer Kraft in einer Gegenrichtung herauszuziehen.

Günstigerweise ist das Montagesystem derart konfiguriert, dass der mindestens eine Vorsprung, wenn die relative Verschiebung in der zweiten Richtung zwischen der Zwischenführung und dem Passstück ausgeführt wird, die mindestens zwei Klauen der Aufnahme öffnet, sodass sie sich an die Karosserie anklammern. Dadurch richtet sich die Aufnahme mit mindestens zwei Klauen beim Verschieben der Zwischenführung in der zweiten Montagerichtung aus und wird mit dem mindestens einen Vorsprung des Passstücks eingeführt, sodass sich die Aufnahme ausdehnt und die Enden der mindestens zwei Klauen mechanisch zurückgehalten sind, wodurch der Spoiler an der Karosserie befestigt ist. Andererseits wird, da eine mechanische Spannung zwischen der Aufnahme der Zwischenführung und dem Vorsprung des Passstücks besteht, und um einen Rücklauf bei der Verschiebung in der zweiten Richtung zu vermeiden, der zu einer unbeabsichtigten Demontage führen würde, der Befestigungsclip gleichzeitig an der Rippe angeklammert. In dieser Situation, wenn die Anbringung des Spoilers beendet ist und die Anordnung korrekt angeklammert ist, ist die Aufnahme der Zwischenführung ausgerichtet und mit dem Vorsprung des Passstücks eingeführt und gleichzeitig der Befestigungsclip der Zwischenführung an der Rippe des Passstücks angeklammert. Diese Anklammerung des Befestigungsclips der Zwischenführung an der Rippe des Passstücks hat den zusätzlichen Vorteil, dass dem Monteur das Montageverlaufsende angezeigt ist, sowohl durch Berührung als auch akustisch.

Ebenfalls im Umfang der Erfindung enthalten ist die Fahrzeugspoileranordnung, die ein Montagesystem gemäß dem Obenstehenden aufweist.

Ebenfalls eine Aufgabe der vorliegenden Erfindung ist ein Verfahren zum Montieren eines Spoilers an einer Karosserie eines Fahrzeugs, wobei der Spoiler Befestigungsmittel an der Fahrzeugkarosserie aufweist, wobei die Befestigungsmittel ein Passstück, das mechanisch mit dem Spoiler verbunden ist, und eine Zwischenführung aufweisen, folgende Schritte aufweisend:
- Vormontieren der Zwischenführung mit dem Passstück des Spoilers,
- Einführen von mindestens einem Teil der Zwischenführung in mindestens eine Öffnung der Fahrzeugkarosserie,
- relatives Bewegen zwischen Passstück und Zwischenführung, sodass sich beide aneinander und an die Fahrzeugkarosserie anklammern.

Dadurch ermöglicht das Montagesystem, den Spoiler an Serienmodellen zu befestigen, ohne das Blech der Karosserie modifizieren zu müssen. Das ist deshalb der Fall, da es dasselbe Teil ist, nämlich die Zwischenführung, das die Funktionen der Vormontage und der Befestigung zusammen ausführt, ohne die Notwendigkeit von Schrauben und daher ohne die Notwendigkeit, das Blech zu modifizieren. Die Zwischenführung sieht die Möglichkeit einer ersten Vormontageposition, die die Ausführung einer optimalen Anpassung der Position ermöglicht, und einer zweiten Position vor, in der die Zwischenführung am Spoiler und an der Fahrzeugkarosserie befestigt ist.

Wobei Schritt des Montierens zwischen dem Passstück und der Zwischenführung ein Vormontieren auf, bei dem eine Einführungsbewegung eines Drehkranzes des Passstücks in eine Gleitbahn der Zwischenführung in einer ersten Richtung und eine Verschiebung in einer zweiten Richtung ausgeführt wird.

Gemäß eines anderen Aspektes des Verfahrens wird der Vormontageschritt ausgeführt, bis ein Kopfstück des Drehkranzes eine Ausbeulung der Gleitbahn überläuft. Dadurch werden beide Stücke, das Passstück und die Zwischenführung, in einer Vormontageposition verbunden, wobei sie ein Verschiebungs- und Anpassungsspiel dazwischen vor ihrer endgültigen Montageposition aufweisen. Genauer gesagt ist dieses Verschiebungsspiel in seinem Verlauf durch die Ausbeulung begrenzt, sodass das Kopfstück auf dem Rückweg nicht leicht dem Fenster der Gleitbahn gegenüberliegen kann, was bedeutet, dass das Passstück und die Zwischenführung sich im Vormontagezustand nicht lösen.

Gemäß einem anderen Aspekt des Montageverfahrens wird der Schritt des relativen Bewegens zwischen dem Passstück und der Zwischenführung mittels relativen Bewegens zwischen der Zwischenführung und dem Passstück in der zweiten Richtung ausgeführt, sodass mindestens ein Vorsprung am Passstück mindestens zwei Klauen einer Aufnahme in der Zwischenführung öffnet, die sich an die Karosserie anklammern. Gleichzeitig und gemäß einem anderen Aspekt des Montageverfahrens umfasst der Schritt des relativen Bewegens zwischen Passstück und Zwischenführung, dass mindestens eine Rippe am Passstück mechanisch mit mindestens einem Befestigungsclip an der Zwischenführung in Einwirkung tritt. Dadurch richtet sich die Aufnahme mit mindestens zwei Klauen beim Verschieben der Zwischenführung in der zweiten Montagerichtung aus und wird mit dem mindestens einen Vorsprung des Passstücks eingeführt, sodass sich die Aufnahme durch mechanische Einwirkung ausdehnt und die Enden der mindestens zwei Klauen mechanisch zurückgehalten sind, wodurch die Spoileranordnung befestigt ist. Andererseits wird, da eine mechanische Spannung zwischen der Aufnahme der Zwischenführung und dem Vorsprung des Passstücks besteht, und um einen Rücklauf bei der Verschiebung in der zweiten Richtung zu vermeiden, der zu einer unbeabsichtigten Demontage führen würde, der Befestigungsclip gleichzeitig an der Rippe angeklammert. In dieser Situation, wenn die Anbringung des Spoilers beendet ist und die Anordnung korrekt angeklammert ist, ist die Aufnahme der Zwischenführung ausgerichtet und mit dem Vorsprung des Passstücks eingeführt und gleichzeitig der Befestigungsclip der Zwischenführung an der Rippe des Passstücks angeklammert. Diese Anklammerung des Befestigungsclips der Zwischenführung an der Rippe des Passstücks hat den zusätzlichen Vorteil, dass dem Monteur das Montageverlaufsende angezeigt ist, sowohl durch Berührung als auch akustisch.

Eine Umkehrung der Anordnung der verschiedenen Elemente des Systems ist ebenfalls im Sinne der Erfindung.

In den beiliegenden Zeichnungen ist als nicht einschränkendes Beispiel ein System zum Montieren eines Spoilers an einer Fahrzeugkarosserie gezeigt, das gemäß der Erfindung ausgebildet ist. Andere Kennzeichen und Vorteile des Systems zum Montieren eines Spoilers an einer Fahrzeugkarosserie, das Gegenstand der Erfindung ist, gehen aus der Beschreibung einer bevorzugten, jedoch nicht ausschließlichen Ausführungsform hervor, die als nicht einschränkendes Beispiel in den beiliegenden Zeichnungen dargestellt ist; es zeigen:
Figur 1 eine allgemeine auseinandergezogene Perspektivansicht und eine Schnittansicht des Systems zum Montieren eines Spoilers in einer Fahrzeugkarosserie gemäß der vorliegenden Erfindung;
Figur 2 eine allgemeine auseinandergezogene Perspektivansicht des Passstücks und der Zwischenführung gemäß der vorliegenden Erfindung;
Figur 3 eine Draufsicht des Passstücks und der Zwischenführung nach der Montage gemäß der vorliegenden Erfindung;
Figur 4 eine Schnittansicht des Montagesystems in zwei Positionen entsprechend der zweiten Richtung gemäß der vorliegenden Erfindung;
Figur 5 eine Draufsicht im Detail des Passstücks und der Zwischenführung in zwei Montagepositionen entsprechend der zweiten Richtung gemäß der vorliegenden Erfindung;
Figur 6 eine Perspektivansicht im Detail des Passstücks und der Zwischenführung in einer ersten Montageposition gemäß der vorliegenden Erfindung;
Figur 7 eine Perspektivansicht im Detail des Passstücks und der Zwischenführung in einer zweiten Montageposition entsprechend der zweiten Richtung gemäß der vorliegenden Erfindung;
Figur 8a eine Perspektivansicht im Detail eines ersten Schritts des Montierens des Spoilers an der Fahrzeugkarosserie entsprechend der ersten Richtung gemäß der vorliegenden Erfindung;
Figur 8b eine Perspektivansicht im Detail eines zweiten Schritts des Montierens des Spoilers an der Fahrzeugkarosserie entsprechend der ersten Richtung gemäß der vorliegenden Erfindung;
Figur 8c eine Perspektivansicht im Detail eines dritten Schritts des Montierens des Spoilers an der Fahrzeugkarosserie entsprechend der ersten Richtung gemäß der vorliegenden Erfindung;
Figur 8d eine Perspektivansicht im Detail eines vierten Schritts des Montierens des Spoilers an der Fahrzeugkarosserie entsprechend der ersten Richtung gemäß der vorliegenden Erfindung;
Figur 9 eine Perspektivansicht im Detail der Montage des Passstücks und der Zwischenführung in einer ersten und zweiten Montageposition entsprechend der zweiten Richtung gemäß der vorliegenden Erfindung.

In den angegebenen Figuren und gemäß den vergebenen Bezugszeichen ist ein bevorzugtes Ausführungsbeispiel der Erfindung zu sehen, das die Teile und Elemente aufweist, welche im Folgenden angegeben und detailliert beschrieben sind.

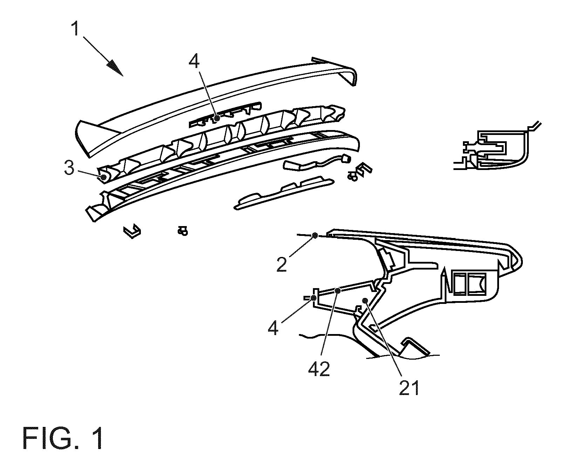

Wie aus Figur 1 bis 9 ersichtlich, weist das System zum Montieren eines Spoilers 1 an der Karosserie eines Fahrzeugs Befestigungsmittel des Spoilers 1 an der Karosserie 2 auf, wobei die Befestigungsmittel ein Passstück 3, das mechanisch mit dem Spoiler 1 verbunden ist, und eine Zwischenführung 4 aufweisen, wobei das Passstück 3 und die Zwischenführung 4 untereinander Haltemittel aufweisen, und wobei das Passstück 3 und die Zwischenführung 4 Mittel zum Anklammern an mindestens eine Öffnung 21 der Karosserie 2 des Fahrzeugs aufweisen.

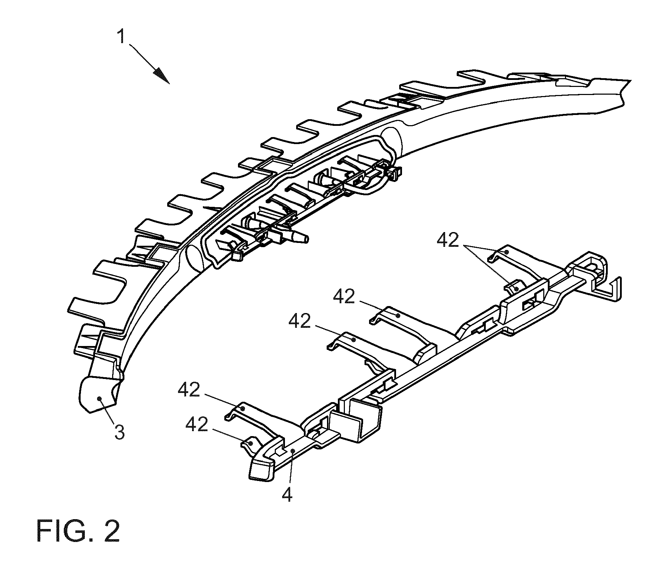

Insbesondere weist, wie aus Figur 2 bis 5 ersichtlich, das Montagesystem Haltemittel auf, die am Passstück 3 mindestens einen Drehkranz 31 aufweisen, der in eine Gleitbahn 41 in der Zwischenführung 4 eingeführt und darin verschoben wird. Es ist anzumerken, dass der Drehkranz 31 in einer ersten Richtung in die Gleitbahn 41 eingeführt wird und der Drehkranz 31 in der Gleitbahn 41 in einer zweiten Richtung verschoben wird, die nicht die erste Richtung ist, sodass die relative Anklammerbewegung zwischen Passstück 3 und Zwischenführung 4 im Wesentlichen senkrecht zur Einführungsrichtung der Haltemittel verläuft.

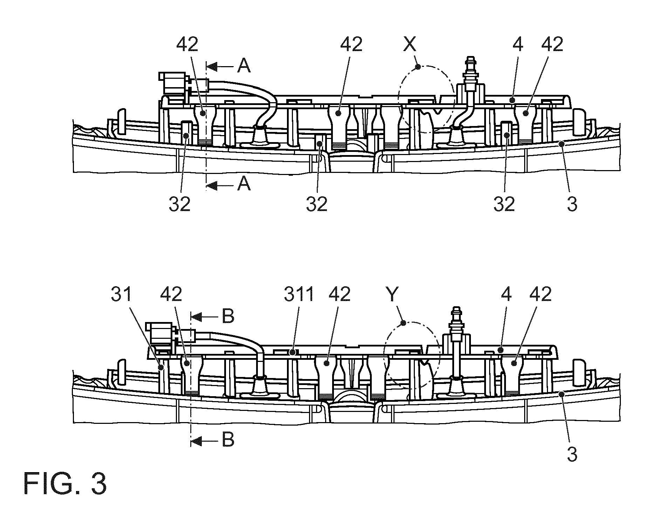

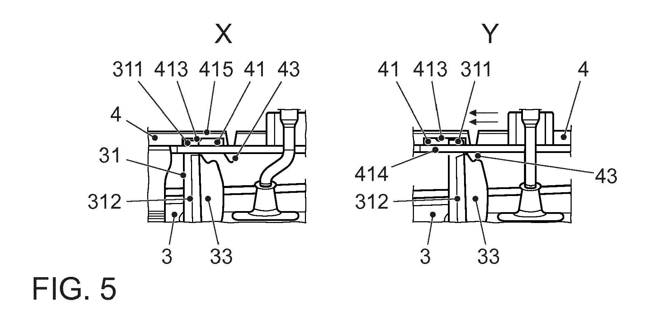

Genauer gesagt weist, wie aus Figur 3 und 5 ersichtlich, der Drehkranz 31 ein Kopfstück 311 und eine Säule 312 mit einer geringeren Abmessung als das Kopfstück 311 auf und die Gleitbahn 41 ein Fenster 411 und einen Durchgang 412 mit einer geringeren Abmessung als das Fenster 411 auf, sodass das Kopfstück 311 eine kleinere Abmessung als das Fenster 411 aufweist und die Säule 312 eine kleinere Abmessung als der Durchgang 412 aufweist.

Andererseits weist, wie aus Figur 3 und 5 ersichtlich, die Gleitbahn 41 der Zwischenführung 4 eine Decke 415 und einen Boden 414 auf, zwischen denen das Kopfstück 311 des Drehkranzes 31 verschoben wird.

Zudem weist, wie aus Figur 5 ersichtlich, die Gleitbahn 41 der Zwischenführung 4 eine Ausbeulung 413 auf, die das Kopfstück 311 während einer Verschiebung in der zweiten Richtung durch die Gleitbahn 41 überläuft. Die erste Ausbeulung 413 befindet sich genau am Einführungspunkt des Kopfstücks 311 in die Gleitbahn 41, sodass es darüber laufen muss, um die Bewegung in der zweiten Richtung zu beginnen. Die Ausbeulung 413 kann sich an der Decke 415 oder alternativ am Boden 414, jedoch stets im Inneren der Gleitbahn 41 befinden.

Gemäß einem anderen Aspekt der Erfindung weisen, wie aus Figur 3 und 5 ersichtlich, die Anklammermittel am Passstück 3 mindestens eine Rippe 33 und an der Zwischenführung 4 mindestens einen Befestigungsclip 43 auf, sodass die mindestens eine Rippe 33 mechanisch mit dem mindestens einen Befestigungsclip 43 in Einwirkung tritt.

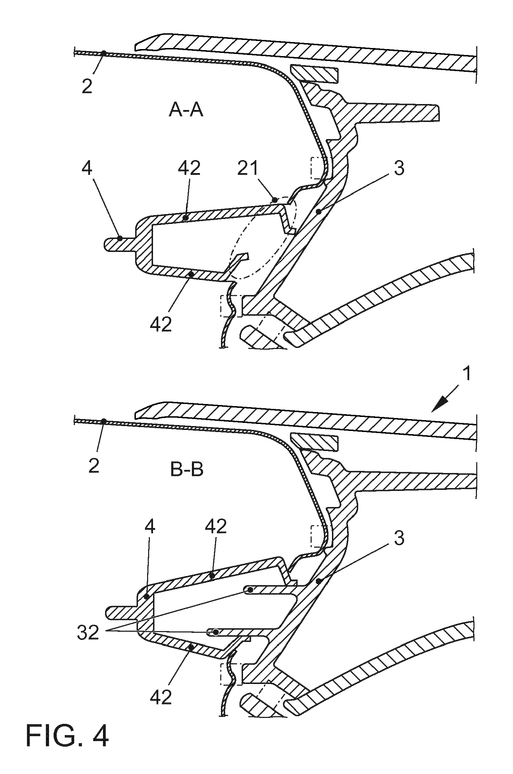

Insbesondere weisen, wie aus Figur 2 und 4 ersichtlich, die Anklammermittel an der Zwischenführung 4 mindestens eine Aufnahme 42 mit mindestens zwei Klauen und am Passstück 3 mindestens einen Vorsprung 32 auf. Die Montage wird spezifisch durch zwei Bewegungen ausgeführt, eine erste Bewegung in einer ersten Richtung und eine zweite Bewegung in einer zweiten Richtung. Die erste Bewegung ermöglicht das Einführen von mindestens einem Drehkranz 31 in Führungsflächen oder eine Gleitbahn 41 der Zwischenführung 4. In dieser Position führt die Aufnahme 42 keine Befestigungsfunktion aus. In dieser Position ist sie jedoch an dem mindestens einen Vorsprung 32 des Passstücks 3 ausgerichtet. In dieser Vormontageposition ist der Drehkranz 31 in die Gleitbahn 41 der Zwischenführung 4 eingeführt und ist mittels einer kleinen Ausbeulung 413 in dieser Position statisch. Schließlich wird eine zweite Bewegung in einer zweiten Richtung durchgeführt, bei der der mindestens eine Drehkranz 31 durch die Gleitbahn 41 geführt wird, wodurch die Klauen der Aufnahme 42 gleichzeitig an dem mindestens einen Vorsprung 32 des Passstücks 3 befestigt werden. In dieser Position ist der Spoiler 1 befestigt, wobei gleichzeitig der mindestens eine Drehkranz 31, in dessen Basis sich mindestens eine Rippe 33 befindet, durch einen Befestigungsclip 43 angeklammert ist.

Unter kleine Ausbeulung 413 versteht sich, dass die Abmessung der Ausbeulung 413 derart ist, dass das Kopfstück 311 des Drehkranzes 31 sie überlaufen kann, wenn der Monteur manuell eine Kraft darauf ausübt.

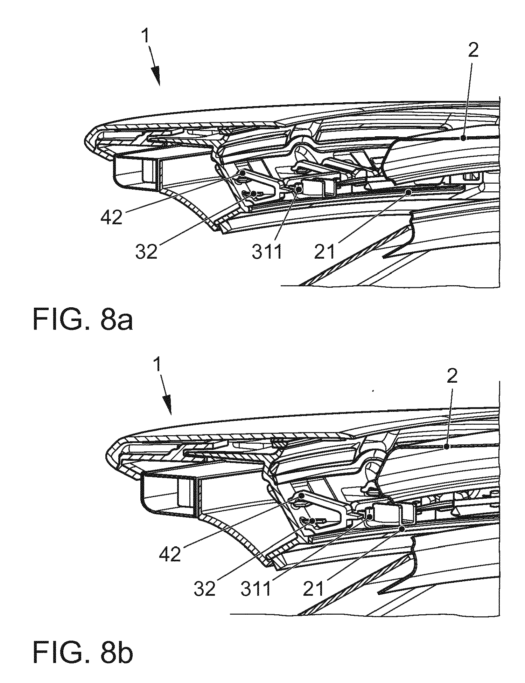

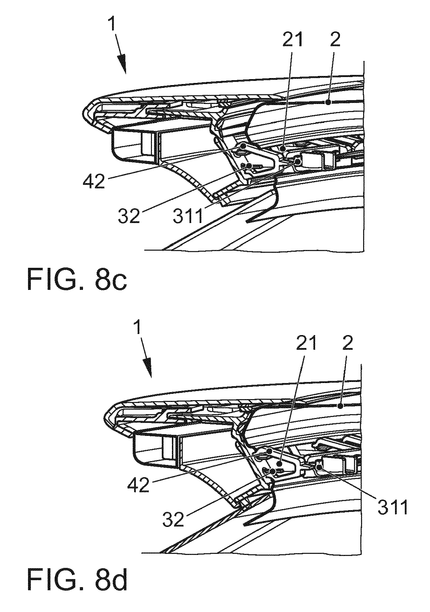

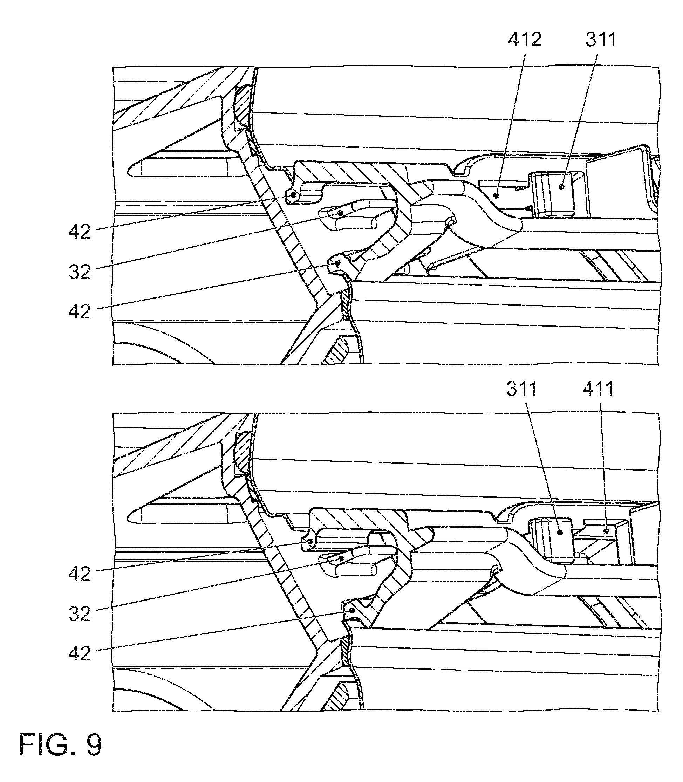

Andererseits ist, wie aus Figur 8 und 9 ersichtlich, das Montagesystem derart konfiguriert, dass der mindestens eine Vorsprung 32, wenn die relative Verschiebung in der zweiten Richtung zwischen der Zwischenführung 4 und dem Passstück 3 durchgeführt wird, die mindestens zwei Klauen der Aufnahme 42 öffnet, sodass sie sich an die Karosserie 2 anklammern. Dabei ist mindestens ein Vorsprung 32 in einer bevorzugten Ausführung mit einem in der zweiten Richtung rampenförmigen Teilabschnitt gestaltet, der die Aufnahme 42, genauer gesagt die zwei Klauen, die sie bilden, bei ihrem gegenseitigen Einführen öffnet. Der Vorsprung 32 kann durch zwei Flügel, die einander gegenüberliegen, gebildet sein, wie in den Figuren, oder alternativ ein massives Einzelteil sein.

Ebenfalls im Umfang der vorliegenden Erfindung enthalten ist der Spoiler 1 in seiner Fahrzeuganordnung, die ein Montagesystem gemäß der bevorzugten Ausführungsform aufweist, welche obenstehend aufgeführt ist.

Ebenso, wie aus Figur 8a bis 8d ersichtlich, ist das Verfahren zum Montieren eines Spoilers 1 an einer Karosserie 2 eines Fahrzeugs Gegenstand der vorliegenden Erfindung, wobei der Spoiler 1 Befestigungsmittel an der Fahrzeugkarosserie 2 aufweist, wobei die Befestigungsmittel ein Passstück 3, das mechanisch mit dem Spoiler 1 verbunden ist, und eine Zwischenführung 4 aufweisen, wobei das Verfahren folgende Schritte aufweist:
- Vormontieren der Zwischenführung 4 mit dem Passstück 3 des Spoilers 1,
- Einführen von mindestens einem Teil der Zwischenführung 4 in mindestens eine Öffnung 21 der Karosserie 2 des Fahrzeugs,
- relatives Bewegen zwischen Passstück 3 und Zwischenführung 4, sodass sich beide aneinander und an die Karosserie 2 des Fahrzeugs anklammern.

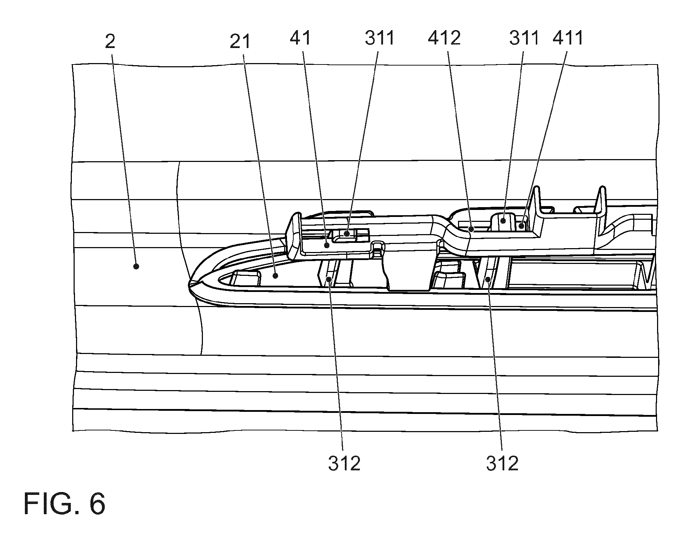

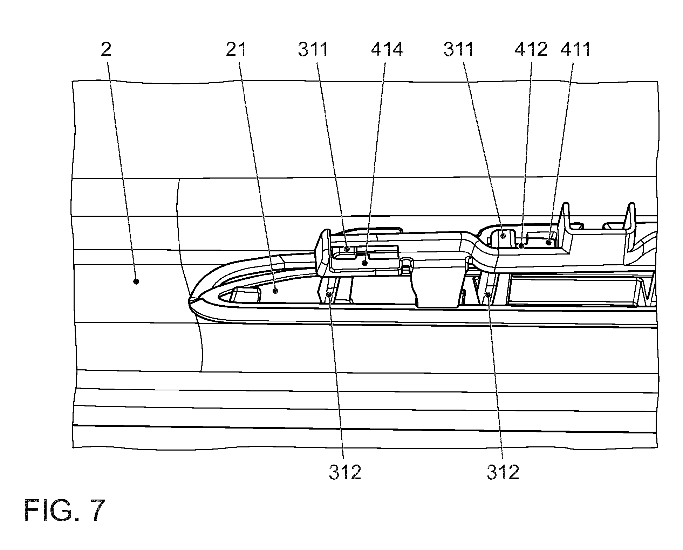

Gemäß einem anderen Aspekt des Montageverfahrens weist, wie aus Figur 6 und 7 ersichtlich, der Schritt des Montierens zwischen dem Passstück 3 und der Zwischenführung 4 ein Vormontieren auf, bei dem eine Einführungsbewegung eines Drehkranzes 31 des Passstücks 3 in eine Gleitbahn 41 der Zwischenführung 4 in einer ersten Richtung und eine Verschiebung in einer zweiten Richtung ausgeführt wird, bis ein Kopfstück 311 des Drehkranzes 31 eine Ausbeulung 413 der Gleitbahn 41 überläuft.

Gemäß einem anderen Aspekt des Montageverfahrens, wie aus Figur 8 und 9 ersichtlich, wird der Schritt des relativen Bewegens zwischen Passstück 3 und Zwischenführung 4 mittels relativen Bewegens zwischen der Zwischenführung 4 und dem Passstück 3 in der zweiten Richtung ausgeführt, sodass mindestens ein Vorsprung 32 am Passstück 3 mindestens zwei Klauen einer Aufnahme 42 in der Zwischenführung 4 öffnet, die sich an die Karosserie anklammern.

Gemäß einem anderen Aspekt des Montageverfahrens umfasst, wie aus Figur 3 und 4 ersichtlich, der Schritt des relativen Bewegens zwischen Passstück 3 und Zwischenführung 4, dass mindestens eine Rippe 33 am Passstück 3 mechanisch mit mindestens einem Befestigungsclip 43 an der Zwischenführung 4 in Einwirkung tritt.

Die Details, Formen, Abmessungen und sonstigen Zusatzelemente sowie die Materialien, die bei der Herstellung der Bauteile des Systems zum Montieren eines Spoilers an der Karosserie eines Fahrzeugs zur Anwendung kommen, können zweckdienlich durch andere ersetzt werden, die technisch äquivalent sind und sich weder vom Wesen der Erfindung noch vom Schutzumfang der Ansprüche entfernen, welcher durch die Ansprüche definiert ist, die im Anschluss an die beiliegende Bezugszeichenliste aufgeführt sind.

### Bezugszeichenliste:

- 1: Spoiler
- 2: Karosserie
- 21: Öffnung
- 3: Passstück
- 31: Drehkranz
- 311: Kopfstück
- 312: Säule
- 32: Vorsprung
- 33: Rippe
- 4: Zwischenführung
- 41: Gleitbahn
- 411: Fenster
- 412: Durchgang
- 413: Ausbeulung
- 414: Boden
- 415: Decke
- 42: Aufnahme
- 43: Befestigungsclip

## Patentansprüche

1. System zum Montieren eines Spoilers (1) an der Karosserie (2) eines Fahrzeugs, wobei der Spoiler (1) Befestigungsmittel an der Karosserie (2) aufweist, die Befestigungsmittel ein Passstück (3), das mechanisch mit dem Spoiler (1) verbunden ist, und eine Zwischenführung (4) aufweisen, wobei das Passstück (3) und die Zwischenführung (4) untereinander Haltemittel aufweisen, und wobei das Passstück (3) und die Zwischenführung (4) Mittel zum Anklammern an mindestens eine Öffnung (21) der Karosserie (2) des Fahrzeugs aufweisen, **dadurch gekennzeichnet, dass** die Haltemittel am Passstück (3) mindestens einen Drehkranz (31) aufweisen, der in mindestens eine Gleitbahn (41) in der Zwischenführung (4) eingeführt und darin verschoben wird.

2. Montagesystem nach Anspruch 1, **dadurch gekennzeichnet, dass** der Drehkranz (31) in einer ersten Richtung in die Gleitbahn (41) eingeführt wird und der Drehkranz (31) in der Gleitbahn (41) in einer zweiten Richtung verschoben wird, die nicht die erste Richtung ist.

3. Montagesystem nach einem der Ansprüche 1 oder 2, **dadurch gekennzeichnet, dass** der Drehkranz (31) ein Kopfstück (311) und eine Säule (312) mit einer geringeren Abmessung als das Kopfstück (311) aufweist und die Gleitbahn (41) ein Fenster (411) und einen Durchgang (412) mit einer geringeren Abmessung als das Fenster (411) aufweist, sodass das Kopfstück (311) eine kleinere Abmessung als das Fenster (411) aufweist und die Säule (312) eine kleinere Abmessung als der Durchgang (412) aufweist.

4. Montagesystem nach einem der Ansprüche 1 bis 3, **dadurch gekennzeichnet, dass** die Gleitbahn (41) der Zwischenführung (4) eine Decke (415) und einen Boden (414) aufweist, zwischen denen das Kopfstück (311) des Drehkranzes (31) verschoben wird.

5. Montagesystem nach einem der Ansprüche 1 bis 4, **dadurch gekennzeichnet, dass** die Gleitbahn (41) der Zwischenführung (4) eine Ausbeulung (413) aufweist, die das Kopfstück (311) während einer Verschiebung in der zweiten Richtung durch die Gleitbahn (41) überläuft.

6. Montagesystem nach Anspruch 1, **dadurch gekennzeichnet, dass** die Mittel zum Anklammern am Passstück (3) mindestens eine Rippe (33) und an der Zwischenführung (4) mindestens einen Befestigungsclip (43) aufweisen, sodass die mindestens eine Rippe (33) mechanisch mit dem mindestens einen Befestigungsclip (43) in Einwirkung tritt.

7. Montagesystem nach Anspruch 1, **dadurch gekennzeichnet, dass** die Mittel zum Anklammern in der Zwischenführung (4) mindestens eine Aufnahme (42) mit mindestens zwei Klauen und am Passstück (3) mindestens einen Vorsprung (32) aufweisen.

8. Montagesystem nach Anspruch 7, **dadurch gekennzeichnet, dass** es derart konfiguriert ist, dass der mindestens eine Vorsprung (32), wenn die relative Verschiebung in der zweiten Richtung zwischen der Zwischenführung (4) und dem Passstück (3) ausgeführt wird, die mindestens zwei Klauen der Aufnahme (42) öffnet, sodass sie sich an die Karosserie (2) anklammern.

9. Fahrzeugspoiler (1), aufweisend ein Montagesystem gemäß Anspruch 1.

10. Verfahren zum Montieren eines Spoilers (1) an einer Karosserie (2) eines Fahrzeugs, wobei der Spoiler (1) Befestigungsmittel an der Fahrzeugkarosserie (2) aufweist, wobei die Befestigungsmittel ein Passstück (3), das mechanisch mit dem Spoiler (1) verbunden ist, und eine Zwischenführung (4) aufweisen, wobei das Verfahren folgende Schritte aufweist:
- Vormontieren der Zwischenführung (4) mit dem Passstück (3) des Spoilers (1),
- Einführen von mindestens einem Teil der Zwischenführung (4) in mindestens eine Öffnung (21) der Karosserie (2) des Fahrzeugs,
- relatives Bewegen zwischen Passstück (3) und Zwischenführung (4), sodass sich beide aneinander und an die Karosserie (2) des Fahrzeugs anklammern, **dadurch gekennzeichnet, dass**, der Schritt des Montierens zwischen dem Passstück (3) und der Zwischenführung (4) ein Vormontieren aufweist, bei dem eine Einführungsbewegung eines Drehkranzes (31) des Passstücks (3) in eine Gleitbahn (41) der Zwischenführung (4) in einer ersten Richtung und eine Verschiebung in einer zweiten Richtung ausgeführt wird.

11. Montageverfahren nach Anspruch 10, **dadurch gekennzeichnet, dass** der Schritt des Vormontierens ausgeführt wird, bis ein Kopfstück (311) des Drehkranzes (31) eine Ausbeulung (413) der Gleitbahn (41) überläuft.

12. Montageverfahren nach Anspruch 11, **dadurch gekennzeichnet, dass** der Schritt des relativen Bewegens zwischen Passstück (3) und Zwischenführung (4) mittels relativen Verschiebens zwischen der Zwischenführung (4) und dem Passstück (3) in der zweiten Richtung ausgeführt wird, sodass mindestens ein Vorsprung (32) am Passstück (3) mindestens zwei Klauen einer Aufnahme (42) in der Zwischenführung (4) öffnet, die sich an die Karosserie (2) anklammern.

13. Montageverfahren nach einem der Ansprüche 10 oder 12, **dadurch gekennzeichnet, dass** der Schritt des relativen Bewegens zwischen Passstück (3) und Zwischenführung (4) umfasst, dass mindestens eine Rippe (33) am Passstück (3) mechanisch mit mindestens einem Befestigungsclip (43) an der Zwischenführung (4) in Einwirkung tritt.

## Claims

1. System for fitting a spoiler (1) to the body (2) of a vehicle, wherein the spoiler (1) has fastening means to the body (2), the fastening means have a mating part (3), which is mechanically connected to the spoiler (1), and an intermediate guide (4), wherein the mating part (3) and the intermediate guide (4) have holding means to each other, and wherein the mating part (3) and the intermediate guide (4) have means for clipping onto at least one opening (21) in the body (2) of the vehicle, **characterized in that** the holding means on the mating part (3) have at least one swivel ring (31) which is introduced into at least one slideway (41) in the intermediate guide (4) and is displaced therein.

2. Fitting system according to Claim 1, **characterized in that** the swivel ring (31) is introduced into the slideway (41) in a first direction, and the swivel ring (31) is displaced in the slideway (41) in a second direction which is not the first direction.

3. Fitting system according to either of Claims 1 and 2, **characterized in that** the swivel ring (31) has a headpiece (311) and a column (312) of a smaller size than the headpiece (311), and the slideway (41) has an aperture (411) and a passage (412) of a smaller size than the aperture (411), and therefore the headpiece (311) is of a smaller size than the aperture (411) and the column (312) is of a smaller size than the passage (412).

4. Fitting system according to one of Claims 1 to 3, **characterized in that** the slideway (41) of the intermediate guide (4) has a top (415) and a base (414), between which the headpiece (311) of the swivel ring (31) is displaced.

5. Fitting system according to one of Claims 1 to 4, **characterized in that** the slideway (41) of the intermediate guide (4) has a bulge (413) over which the headpiece (311) runs during displacement in the second direction through the slideway (41).

6. Fitting system according to Claim 1, **characterized in that** the means for clipping to the mating part (3) has at least one rib (33) and, on the intermediate guide (4), at least one fastening clip (43), and therefore the at least one rib (33) enters mechanically into action with the at least one fastening clip (43).

7. Fitting system according to Claim 1, **characterized in that** the clipping means has at least one receptacle (42) with at least two claws in the intermediate guide (4) and at least one projection (32) on the mating part (3).

8. Fitting system according to Claim 7, **characterized in that** said fitting system is configured in such a manner that, when the relative displacement is carried out between the intermediate guide (4) and the mating part (3) in the second direction, the at least one projection (32) opens the at least two claws of the receptacle (42) such that they clip onto the body (2).

9. Vehicle spoiler (1) having a fitting system according to Claim 1.

10. Method for fitting a spoiler (1) to a body (2) of a vehicle, wherein the spoiler (1) has fastening means to the vehicle body (2), wherein the fastening means have a mating part (3), which is mechanically connected to the spoiler (1), and an intermediate guide (4), wherein the method has the following steps:
- preassembling the intermediate guide (4) together with the mating part (3) of the spoiler (1),
- introducing at least part of the intermediate guide (4) into at least one opening (21) in the body (2) of the vehicle,
- moving mating part (3) and intermediate guide (4) relative to each other such that the two clip to each other and to the body (2) of the vehicle, **characterized in that** the step of fitting the mating part (3) and the intermediate guide (4) involves preassembly in which an introduction movement of a swivel ring (31) of the mating part (3) into a slideway (41) of the intermediate guide (4) is carried out in a first direction and a displacement is carried out in a second direction.

11. Fitting method according to Claim 10, **characterized in that** the preassembly step is carried out until a headpiece (311) of the swivel ring (31) runs over a bulge (413) of the slideway (41).

12. Fitting method according to Claim 11, **characterized in that** the step of moving mating part (3) and intermediate guide (4) relative to each other is carried out by means of relative displacement between the intermediate guide (4) and the mating part (3) in the second direction such that at least one projection (32) on the mating part (3) opens at least two claws of a receptacle (42) in the intermediate guide (4), said claws clipping onto the body (2).

13. Fitting method according to either of Claims 10 and 12, **characterized in that** the step of moving mating part (3) and intermediate guide (4) relative to each other comprises at least one rib (33) on the mating part (3) entering mechanically into action with at least one fastening clip (43) on the intermediate guide (4).

## Revendications

1. Système de montage d'un déflecteur (1) de type spoiler sur la carrosserie (2) d'un véhicule, le déflecteur (1) comportant des moyens de fixation à la carrosserie (2), les moyens de fixation comportant une pièce d'assemblage (3) reliée de façon mécanique au déflecteur (1) ainsi qu'un guide intermédiaire (4), la pièce d'assemblage (3) et le guide intermédiaire (4) comportant entre eux des moyens d'arrêt et la pièce d'assemblage (3) et le guide intermédiaire (4) comportant des moyens de cramponnage à au moins une ouverture (21) de la carrosserie (2) du véhicule, **caractérisé en ce que** les moyens d'arrêt comportent au niveau de la pièce d'assemblage (3) au moins une couronne pivotante (31) introduite dans au moins une glissière (41) prévue dans le guide intermédiaire (4) et coulissant à l'intérieur de celui-ci.

2. Système de montage selon la revendication 1, **caractérisé en ce que** la couronne pivotante (31) est introduite dans une première direction dans la glissière (41) et que la couronne pivotante (31) est coulissée dans la glissière (41) dans une deuxième direction qui n'est pas la première direction.

3. Système de montage selon l'une quelconque des revendications 1 ou 2, **caractérisé en ce que** la couronne pivotante (31) comporte une pièce de tête (311) et un montant (312) de dimension davantage réduite que la pièce de tête (311) et la glissière (41) comportant une fenêtre (411) et un passage (412) de dimension davantage réduite que la fenêtre (411), de sorte que la pièce de tête (311) présente une plus petite dimension que la fenêtre (411) et que le montant (312) présente une plus petite dimension que le passage (412).

4. Système de montage selon l'une quelconque des revendications 1 à 3, **caractérisé en ce que** la glissière (41) du guide intermédiaire (4) comporte un plafond (415) et un plancher (414) entre lesquels la pièce de tête (311) de la couronne pivotante (31) coulisse.

5. Système de montage selon l'une quelconque des revendications 1 à 4, **caractérisé en ce que** la glissière (41) du guide intermédiaire (4) comporte un bosselage (413) passant par-dessus la pièce de tête (311) pendant un coulissement dans la deuxième direction à travers la glissière (41).

6. Système de montage selon la revendication 1, **caractérisé en ce que** les moyens de cramponnage à la pièce d'assemblage (3) comportent au moins une nervure (33) et comportent au niveau du guide intermédiaire (4) au moins un clip de fixation (43), de sorte que l'au moins une nervure (33) entre en action de façon mécanique avec l'au moins un clip de fixation (43).

7. Système de montage selon la revendication 1, **caractérisé en ce que** les moyens de cramponnage comportent dans le guide intermédiaire (4) au moins un logement (42) avec au moins deux griffes et au niveau de la pièce d'assemblage (3) au moins une saillie (32).

8. Système de montage selon la revendication 7, **caractérisé en ce qu'**il est configuré de telle sorte que l'au moins une saillie (32) ouvre, lorsque le coulissement relatif dans la deuxième direction se produit entre le guide intermédiaire (4) et la pièce d'assemblage (3), les au moins deux griffes du logement (42), de sorte qu'elles se cramponnent à la carrosserie (2).

9. Déflecteur de véhicule (1), comportant un système de montage selon la revendication 1.

10. Procédé de montage d'un déflecteur (1) à une carrosserie (2) d'un véhicule, le déflecteur (1) comportant des moyens de fixation à la carrosserie de véhicule (2), les moyens de fixation comportant une pièce d'assemblage (3) reliée de façon mécanique au déflecteur (1) et un guide intermédiaire (4), le procédé présentant les étapes suivantes :
- prémontage du guide intermédiaire (4) avec la pièce d'assemblage (3) du déflecteur (1) ;
- introduction d'au moins une partie du guide intermédiaire (4) dans au moins une ouverture (21) de la carrosserie (2) du véhicule ;
- déplacement relatif entre la pièce d'assemblage (3) et le guide intermédiaire (4), de sorte que ces deux éléments se cramponnent l'un à l'autre et à la carrosserie (2) du véhicule ;
**caractérisé en ce que** l'étape de montage entre la pièce d'assemblage (3) et le guide intermédiaire (4) comporte un prémontage au cours duquel un mouvement d'introduction d'une couronne pivotante (31) de la pièce d'assemblage (3) est réalisé dans une glissière (41) du guide intermédiaire (4) dans une première direction et au cours duquel un coulissement est réalisé dans une deuxième direction.

11. Procédé de montage selon la revendication 10, **caractérisé en ce que** l'étape de prémontage est réalisée jusqu'à ce qu'une pièce de tête (311) de la couronne pivotante (31) passe par-dessus un bosselage (413) de la glissière (41).

12. Procédé de montage selon la revendication 11, **caractérisé en ce que** l'étape de déplacement relatif entre la pièce d'assemblage (3) et le guide intermédiaire (4) est réalisée à l'aide du coulissement relatif entre le guide intermédiaire (4) et la pièce d'assemblage (3) dans la deuxième direction, de sorte qu'au moins une saillie (32) ouvre au niveau de la pièce d'assemblage (3) au moins deux griffes d'un logement (42) prévu dans le guide intermédiaire (4), lesdites griffes se cramponnant à la carrosserie (2).

13. Procédé de montage selon l'une quelconque des revendications 10 ou 12, **caractérisé en ce que** l'étape de déplacement relatif entre la pièce d'assemblage (3) et le guide intermédiaire (4) comprend qu'au moins une nervure (33) prévue au niveau de la pièce d'assemblage (3) entre en action de façon mécanique avec au moins un clip de fixation (43) prévu au niveau du guide intermédiaire (4).
